# EUROPEAN PATENT APPLICATION

(11) **EP 4 129 123 A1**
(43) Date of publication of application: **08.02.2023**
(21) Application number: 22000172.1
(22) Date of filing: 30.06.2022
(51) Int. Cl.: A47G 29/30, A47G 29/122, G01V 8/20

(54) **OPTICAL PARCEL DETECTION SYSTEM**

(30) Priority: 05.08.2021 PL 43869821
(71) Applicant: Integer.pl S.A., 30-552 Kraków (PL)
(72) Inventor: Bartosz, Kutek, 30-619 Kraków (PL)
(74) Representative: Tabor-Kmiecik, Katarzyna

(57) **Abstract**

The optical parcel detection system in a locker of a parcel distributor cabinet comprises a control and power supply module (4.0), a transmitter unit (5.0) and a receiver unit (6)located in the parcel distributor cabinet and incorporated into the parcel distributor system. Inside the locker (1.0) there is at least one transmitter unit (5.0) and at least one receiver unit (6.0) located on opposite walls (1.2) of the locker. Each unit comprises optoelectronic components (8.2) and is made as a printed circuit board (8. 1) enclosed in an elongated housing (8.4). The emitter unit (5.0) comprises at least four IR emitters (5.1) and an LED driver (5.2), and the receiver unit (6.0) comprises at least four IR NPN phototransistors (6. 1) with a wavelength in the nearinfrared range, a multiplexer (6.2), an OR logic module (6.3). Housings (8.4) have openings (8.5) made on their long sides, which correspond to the arrangement of IR emitters (5.1) and IR phototransistors (6.1), respectively. Optical system is characterised by the fact that outputs of IR phototransistors (6.1) are connected to the multiplexer (6.2) inputs Y1-Y7, control lines from the microcontroller (7.0) are connected to the multiplexer (6.2) control inputs S0, S1, S2, and the multiplexer (6.2) output Z is connected to the microcontroller (5.0) input Z. Additionally, the multiplexer (6.2) control lines are connected via the OR logic module (6.3) to the LED driver (5.2) of the transmitter unit (5.0). A transparent shutter (8.6) is provided on the outer surface of the optical components. The first transmitter unit and the first receiver unit are located at the structural bottom (1.1) of the locker, and another transmitter unit (5.0) and another receiver unit (6.0) are located about halfway up the locker (1.0).

## Description

The subject of the invention is an optical parcel detection system in a locker of a parcel distributor cabinet. It relates to parcels placed in or collected from a locker located in a cabinet of a parcel distributor. The system uses an infrared optical method. The system is supported by a dedicated computer program and cooperates with the master system of the parcel distributor. The system allows to evaluate the size and number of parcels in the locker.

A locker occupancy control unit is known from patent description PL226944, which is located in the parcel dispatch and collection cabinet and comprises a tilting bottom and a bottom tilt sensor connected to an electronic control system. The sensor is a flat spring with glued-on strain gauges, and in other embodiments it is a piezoelectric quartz transducer or an accelerator. The description also reveals that monitoring of the locker occupancy status is a prerequisite for the efficient operation of a parcel delivery system that uses the Internet and multi-locker dispatch and collection cabinets with access initiated by an individual digit-letter code. The most commonly used are non-contact units with photoelectric barriers, whose radiation penetrates the locker space and thus detects whether there is a parcel inside. Such embodiments are presented in German patent descriptions DE19945526 and DE4447008.

The optical parcel detection system in a locker of a parcel distributor cabinet according to the present invention comprises an electrical control and power supply module applied in the parcel distributor cabinet, a transmitter unit and a receiver unit located in the parcel distributor cabinet and incorporated into the parcel distributor system.

The essential feature of the invention is that inside the locker there is at least one transmitter unit and at least one receiver unit located on opposite walls of the locker. Each unit comprises optoelectronic components and is made as a printed circuit board enclosed in an elongated housing. The transmitter unit comprises at least four IR emitters and an LED driver. The receiver unit comprises at least four IR NPN phototransistors with a wavelength in the near-infrared range, a multiplexer, and an OR logic module. Housings of the transmitter unit and the receiver unit have openings on their long sides, which correspond to the arrangement of optoelectronic components on the printed circuit boards of IR emitters and IR phototransistors, respectively.

Preferably, in the receiver unit, outputs of IR phototransistors are connected to the multiplexer inputs Y1-Y7, control lines from the microcontroller are connected to the multiplexer control inputs S0, S1, S2, and the multiplexer output Z is connected to the microcontroller input Z.Additionally, the multiplexer control lines are connected via the OR logic module to the LED driver of the transmitter unit.

Preferably, IR emitters on the printed circuit board of the transmitter unit and housing openings, respectively, are evenly distributed over the entire length of the transmitter.

Preferably, IR phototransistors on the printed circuit board of the receiver unit and housing openings, respectively, are evenly distributed over the entire length of the receiver.

Preferably, IR emitters and IR phototransistors have solder pads on the optics side.

Preferably, connections of electronic components are located on the outer side of the locker wall, in the cabinet space. They are accessible through a cut-out in the wall.

Preferably, a transparent shutter is provided on the outer surface of the optical components.

Preferably, the first transmitter unit and the first receiver unit are located at the structural bottom of the locker. The light beams formed are parallel to the structural bottom of the locker.

Preferably, another transmitter unit and another receiver unit are located about halfway up the locker.

Preferably, the receiver unit is located at the side wall of the locker, on the control and power supply module side.

The designed system detects whether a parcel is in the locker or not. It uses beams of infrared light emitted and received by units placed opposite each other. The use of infrared light makes it impossible for external lighting to interfere with the system. Depending on the number of components in the transmitter unit and in the receiver unit, as well as on the number and positioning of units, it is possible to detect single or multiple parcels along with their size. The optoelectronic components have solder pads on the optics side and thus the printed circuit board adheres to the locker wall.

Sample embodiments of the invention are shown in the drawing. Fig. 1 is a block diagram of the system. Fig. 2 shows the locker in the first embodiment, with one pair of transmitter and receiver units, and Fig. 3 shows a detail of the printed circuit board with openings. Fig. 4 shows the locker in the second embodiment, with two pairs of transmitter and receiver units. Fig. 5 shows a fragmentary section of the optoelectronic component mounting. Fig. 6 is a schematic diagram of the electronic circuit, showing the operation of the optical system.

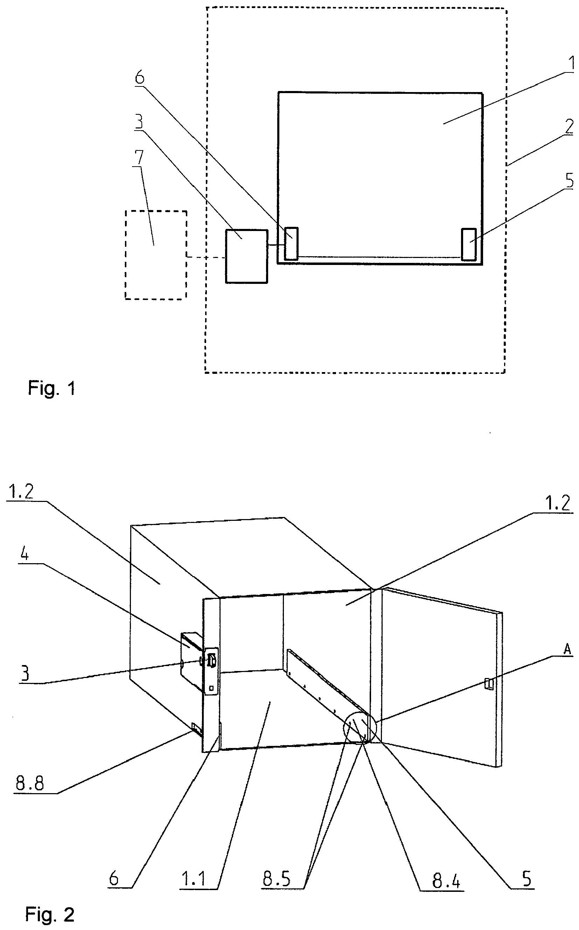

The optical parcel detection system in the locker 1.0 of the parcel distributor cabinet 2.0 comprises electrical control and power supply module 4.0 with the locking mechanism 3.0, transmitter unit 5.0 and receiver unit 6.0 located in the parcel distributor cabinet 2.0 and incorporated into the parcel distributor system. In the first embodiment shown in Fig. 2, one transmitter unit 5.0 and one receiver unit 6.0 are housed inside the locker.

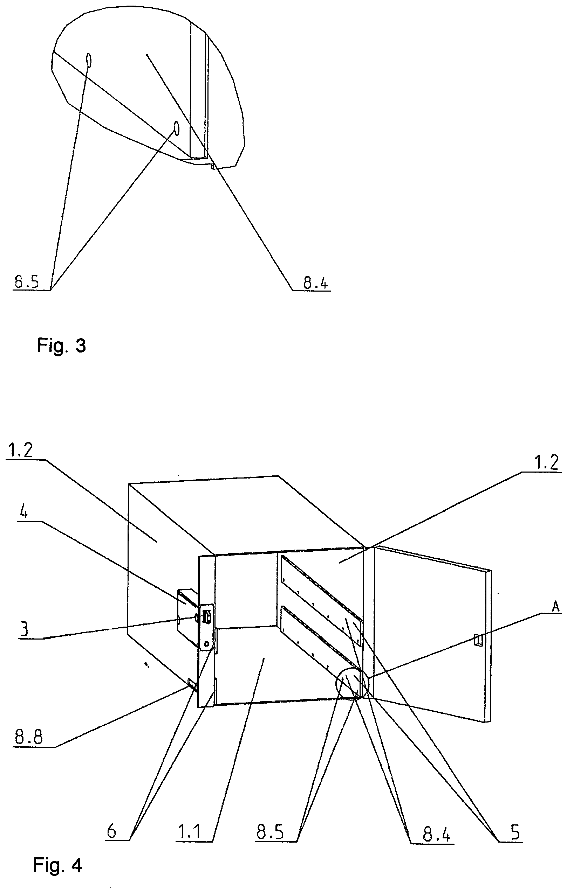

In the second embodiment shown in Fig. 4, the locker houses two pairs of such units.

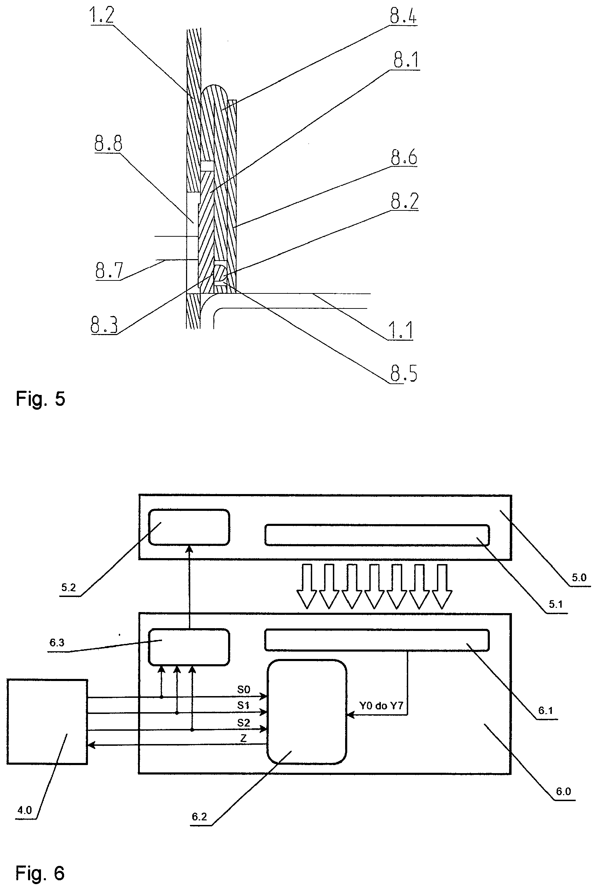

In both embodiments, the transmitter unit 5.0 and the receiver unit 6.0 are located on opposite walls 1.2 of the locker. The transmitter unit 5.0 is mounted on the side of the electric control and power supply module 4.0 located in the locker together with the locking mechanism 3.0. Also in both embodiments, the units are the same and each of them comprises optoelectronic components 8.2 and is made as the printed circuit board 8.1 enclosed in the elongated housing 8.4. The transmitter unit 5.0 comprises seven IR emitters 5.1 and the LED driver 5.2, and the receiver unit 6.0 comprises seven IR NPN phototransistors 6.1 with a wavelength in the near-infrared range, multiplexer 6.2, and OR logic module 6.3. The units are made in the form of printed circuit boards 8.1 with optoelectronic components 8.2. Housings 8.4 have seven openings 8.5 on their long sides, which correspond to the arrangement of IR emitters 5.1 and IR phototransistors 6.1 on the printed circuit boards 8.1. Connections of electronic components are located on the outer side of the locker wall 1.2, in the cabinet space, and are accessible through cut-outs 8.8 in the locker walls. As shown in Fig. 5, in the electronic circuit, outputs of IR phototransistors 6.1 are connected to the multiplexer 6.2 inputs Y1-Y7, control lines from the microcontroller 7.0 are connected to the multiplexer 6.2 control inputs S0, S1, S2, and the multiplexer 6.2 output Z is connected to the microcontroller 7.0 input Z. Additionally, the multiplexer 6.2 control lines are connected via the OR logic module 6.3 to the LED driver 5.2 of the transmitter unit 5.0. Fig. 4 is a schematic representation of the details of mounting the photo-optical component of the transmitter or receiver. Solder pads 8.3 of the electronic components are located on the printed circuit board 8.1 on the wall 1.2 side of the locker, and connections 8.7 of electronic optics components are located in the cabinet 2.0 space of the parcel distributor, on the outer side of the locker. The figure shows an embodiment with an additional transparent shutter 8.6 on the housing 8.4, on the outer surface of the optical components.

In the first embodiment shown in Fig. 2, the transmitter unit 5.0 and the receiver unit 6.0 are located at the structural bottom 1.1 of the locker, and the light beams formed are parallel to the structural bottom of the locker.

In the second embodiment shown in Fig. 3, the first transmitter unit 5.0 and the first receiver unit 6.0 are located at the structural bottom 1.1 of the locker, and the second pair of these units is located about one third of the locker 1.0 height.

The parcel detection process is as follows: The parcel detection process is started by a specific, sequential activation of the output signals S0, S1, S2 from the control and power supply module 4.0 to the multiplexer 6.2 circuit. These signals based on the two-state logic LOW/HIGH allow to read the analogue signal value of each of seven infrared phototransistors 6.1 connected to the multiplexer 6.2 inputs Y1-Y7. At the same time, the correctness of voltage in the power supply section Y0 is checked. When signals S0, S1, S2 are activated, IR emitters 5.1 are also activated by the circuit implementing the logic function of the OR gate 6.3. The IR transmitter unit 5.0 emits infrared light beams to the IR receiver unit 6.0. The optical parcel detection system determines the status of the locker based on the illuminated IR phototransistors 6.1. The values of signals from IR phototransistors 6.1 are transmitted via the signal line Z to the control and power supply module 4.0. A change in the values of the signals from IR phototransistors 6.1 on the lines Y1-Y7 in a certain program-configurable range, indicates that there may be a parcel in the locker 1.0. In other words, an interruption of the light beam between the transmitter unit 5.0 and the receiver unit 6.0 indicates the presence of a parcel in the locker 1.0.

The detection system according to the invention may also find application in objects other than parcel distributors equipped with lockers.

### List of designations

- 1.0: locker
- 1.1: locker structural bottom
- 1.2: locker wall
- 2.0: parcel distributor cabinet
- 3.0: locking mechanism
- 4.0: control and power supply module
- 5.0: transmitter unit
- 5.1: IR emitter
- 5.2: LED driver
- 6.0: receiver unit
- 6.1: IR phototransistors
- 6.2: Multiplexer
- 6.3: OR logic module
- 7.0: parcel distributor system microcontroller
- 8.1: (transmitter or receiver unit) printed circuit board
- 8.2: optoelectronic component
- 8.3: solder pad
- 8.4: transmitter or receiver unit housing
- 8.5: openings (corresponding to the arrangement of optoelectronic components)
- 8.6: transparent shutter
- 8.7: transmitter or receiver unit electrical connections
- 8.8: cut-out for the printed circuit board

## Claims

1. An optical parcel detection system comprising a control and power supply module, a transmitter unit and a receiver unit housed in a parcel distributor cabinet and incorporated in a parcel distributor system, **characterised in that** at least one transmitter unit (5. 0) and at least one receiver unit (6.0) are located on opposite walls (1.2) of the locker and each such unit comprises optoelectronic components (8.2) and is made as a printed circuit board (8. 1) enclosed in an elongated housing (8.4), wherein the emitter unit (5.0) comprises at least four IR emitters (5.1) and an LED driver (5.2), and the receiver unit (6.0) comprises at least four IR NPN phototransistors (6. 1) with a wavelength in the near-infrared range, a multiplexer (6.2), an OR logic module (6.3), while housings (8.4) have openings (8.5) made on their long sides, which correspond to the arrangement of IR emitters (5.1) and IR phototransistors (6.1), respectively.

2. Optical system according to claim 1, **characterised in that** outputs of IR phototransistors (6.1) are connected to the multiplexer (6.2) inputs Y1-Y7, control lines from the microcontroller (7.0) are connected to the multiplexer (6.2) control inputs S0, S1, S2, and the multiplexer (6.2) output Z is connected to the microcontroller (5.0) input Z, and additionally, the multiplexer (6.2) control lines are connected via the OR logic module (6.3) to the LED driver (5.2) of the transmitter unit (5.0).

3. Optical system according to claim 1, **characterised in that** IR emitters (5.1) on the printed circuit board of the transmitter unit and housing openings, respectively, are evenly distributed over the entire length of the transmitter.

4. Optical system according to claim 1, **characterised in that** IR phototransistors (6.1) on the printed circuit board of the receiver unit and housing openings, respectively, are evenly distributed over the entire length of the receiver.

5. Optical system according to claim 1, **characterised in that** IR emitters (5.1) and IR phototransistors (6.1) have solder pads (8.3) on the optics side.

6. Optical system according to claim 1, **characterised in that** a transparent shutter (8.6) is provided on the outer surface of the optical components.

7. Optical system according to claim 1, **characterised in that** the first transmitter unit and the first receiver unit are located at the structural bottom (1.1) of the locker.

8. Optical system according to claim 1, **characterised in that** another transmitter unit (5.0) and another receiver unit (6.0) are located about halfway up the locker (1.0).

9. Optical system according to claim 1, **characterised in that** the receiver unit (6.0) is located on the control and power supply module (4.0) side.
